# EUROPÄISCHE PATENTSCHRIFT

(11) **EP 3 788 681 B1**
(45) Veröffentlichungstag und Bekanntmachung des Hinweises auf die Patenterteilung: **04.01.2023**
(21) Anmeldenummer: 19734281.9
(22) Anmeldetag: 13.06.2019
(51) Int. Cl.: H01R 39/08, H02K 9/28, H01R 39/64, H02K 13/00

(54) **SCHLEIFRING, SCHLEIFRINGEINHEIT, ELEKTRISCHE MASCHINE UND WINDKRAFTANLAGE**
SLIP RING, SLIP RING UNIT, ELECTRIC MACHINE AND WIND TURBINE
BAGUE COLLECTRICE, UNITÉ DE BAGUE COLLECTRICE, MACHINE ÉLECTRIQUE ET ÉOLIENNE

(30) Priorität: 27.07.2018 EP 18186107
(43) Veröffentlichungstag der Anmeldung: 10.03.2021
(73) Patentinhaber: Flender GmbH, 46395 Bocholt (DE)
(72) Erfinder: BINDER, Herbert, 94127 Neuburg (DE); GRUBER, Robert, 94099 Ruhstorf (DE); MEMMINGER, Oliver, 94127 Neuburg a. Inn (DE)
(74) Vertreter: Michalski Hüttermann & Partner Patentanwälte mbB
(86) Internationale Anmeldenummer: PCT/EP2019/065467
(87) Internationale Veröffentlichungsnummer: WO 2020/020533

(56) Entgegenhaltungen:
- EP-A1- 3 322 047
- DE-A1- 2 529 519
- DE-C- 496 818
- DE-U1- 7 734 576

## Beschreibung

Die Erfindung betrifft einen Schleifring und eine Schleifringeinheit. Weiter betrifft die Erfindung eine elektrische Maschine und eine Windkraftanlage.

Generatoren für Windkraftanlagen umfassen zuweilen Spulen im Rotor und im Stator. Die Spulen im Rotor werden in der Regel über Schleifringe mit elektrischer Energie versorgt. Schleifringe sind insbesondere bei der Übertragung von elektrischen Leistungen im Megawatt-Bereich hohen Strombelastungen ausgesetzt. Daraus resultiert eine starke thermische Belastung.

Um die thermische Belastung zu reduzieren, können Schleifringe oder Schleifringeinheiten (Schleifring mit dazu passender stationärer Anordnung) größer ausgebildet werden. Dies ist jedoch, insbesondere in einer Windkraftanlage, nur schlecht möglich.

Deshalb schlägt das Dokument EP 3 322 047 A1 eine Schleifringeinheit mit einem Lüfter-Isoliersegment vor.

Patentschrift DE 496 818 offenbart einen Schleifring mit Kühlluftkanäle, die bis zum Tiefpunkt einer umlaufenden Nut in der Kontaktfläche reichen, wobei die Kanäle in Bezug auf die axiale Richtung und in Bezug auf die Umlaufrichtung geneigt sind.

Die Offenlegungsschrift DE 25 29 519 A1 betrifft einen luftgekühlten Schleifring, der sich aus einzelnen, in Abstand zueinander angeordneten Kreisringscheiben zusammensetzt, in denen miteinander fluchtende Durchlässe enthalten sind, die axial verlaufende, von mindestens einer Stirnseite ausgehende Kühlkanäle bilden.

Das Gebrauchsmuster DE 77 34 576 U1 bezieht sich auf eine Schleifringanordnung für eine elektrische Maschine. Der Schleifringkörper umfasst einen Schleifring sowie einen Tragring und diese verbindende Stege. Der Schleifring ist mit ring- oder wendelförmigen, bis zu achsparallelen Luftdurchtrittsöffnungen reichenden Nuten versehen.

Es ist Aufgabe der Erfindung, einen Schleifring oder eine Schleifringeinheit bereitzustellen, die kompakt ausgeführt werden kann und gleichzeitig große Mengen elektrischer Energie übertragen kann.

Diese Aufgabe wird mit einem Schleifring gemäß Anspruch 1 sowie mit einer Schleifringeinheit gemäß Anspruch 6 gelöst.

Weiter lösen eine elektrische Maschine nach Anspruch 7 und eine Windkraftanlage nach Anspruch 8 diese Aufgabe.

Vorteilhafte Ausführungsformen und Weiterentwicklungen der Erfindung sind Gegenstand der übrigen abhängigen Ansprüche.

Der Erfindung liegt die Idee zu Grunde, dass ein Luftstrom, in axialer Richtung durch Öffnungen in den Schleifring befördert wird und durch Öffnungen wieder aus dem Schleifring in radialer Richtung nach außen befördert wird. Der Luftstrom strömt hierbei an der Innenseite der Aussparung des Schleifrings vorbei und nimmt Wärmeenergie auf. Darüber hinaus kann der radiale Luftstrom zur Kühlung der Schleifringelemente dienen. Besonders vorteilhaft ist hier, dass der in radialer Richtung verlaufende Luftstrom Schleifringelemente besonders gut kühlen kann. Der in radialer Richtung verlaufende Luftstrom dient weiter zur Kühlung von Seitenflächen der Schleifringelemente. Der in radiale Richtung nach außen beförderte Luftstrom ist vorzugsweise zur Kühlung von Schleifringelementen ausgebildet. Vorteilhaft erfolgt die Kühlung der Schleifringelemente von der Unterseite.

Durch den radial nach außen verlaufenden Luftstrom werden die Schleifringelemente besonders gut gekühlt. Der Schleifring weist hierzu Kontaktbereiche auf, wobei die Kontaktbereiche jeweils im Wesentlichen zylinderförmig ausgebildet sind und jeweils eine Aussparung an ihrer Kontaktfläche aufweisen. Die Kontaktfläche ist an der Mantelfläche des zylinderförmigen Kontaktbereichs angeordnet. Darüber hinaus wird zumindest indirekt über die Kühlung der elektrisch leitfähigen Schleifringelemente die Kühlung eines Kontaktbereiches verbessert. Eine verbesserte Kühlung des Schleifrings erlaubt eine kompaktere Bauart des Schleifrings oder der Schleifringeinheit.

Der Schleifring dient insbesondere zur Übertragung von elektrischer Energie auf eine drehbar gelagerte Achse, vorzugsweise in einer Windkraftanlage. Der Schleifring weist zumindest einen Kontaktbereich und zumindest zwei Isolierbereiche auf, wobei die Isolierbereiche und der zumindest eine Kontaktbereich in axialer Richtung benachbart angeordnet sind, wobei der Kontaktbereich zumindest in radial nach außen zeigender Richtung eine Kontaktfläche aufweist, wobei der Kontaktbereich im Bereich der Kontaktfläche zumindest eine Aussparung aufweist,
- wobei die Aussparung an der Innenseite Vorsprünge aufweist
- und/oder die Aussparung in tangentialer Richtung unterbrochen ist.

Der jeweilige Isolierbereich ist vorzugsweise aus Kunststoff hergestellt. Der jeweilige Kontaktbereich ist vorzugsweise im Wesentlichen aus einem elektrisch gut leitfähigen Metall, wie Edelstahl, Kupfer oder Bronze, hergestellt.

Der Kontaktbereich weist an seiner Mantelfläche die Kontaktfläche auf. Zusätzlich kann die Kontaktfläche an einem kreisring-förmigen Bereich der jeweiligen Stirnseite des Kontaktbereiches angeordnet sein.

Die jeweilige Aussparung ist vorzugsweise radialsymmetrisch ausgebildet und weist eine Tiefe auf, die zumindest soweit in den Kontaktbereich hineinreicht, so dass die Öffnungen in die Aussparung führen. Vorzugsweise weist die Aussparung, zumindest bereichsweise, eine Breite in axialer Richtung von einem Viertel bis einem Drittel der Breite der Kontaktfläche auf. Vorzugsweise ist die Aussparung in der axialen Mitte der Kontaktfläche angeordnet.

Die Vorsprünge können bis an die Mantelfläche des jeweiligen Kontaktbereiches ausgebildet sein. Die Vorsprünge können in einer Ausführung als Unterbrechung der Aussparung in tangentialer Richtung ausgebildet sein. Vorsprünge und Unterbrechungen der jeweiligen Aussparung haben vorzugsweise die gleiche Wirkung, nämlich einen Luftstrom in radialer Richtung bereitzustellen. Der Luftstrom dient insbesondere zur Kühlung von Schleifringelementen.

Vorzugsweise erfolgt bei der Herstellung des Schleifringes ein aufeinander Anordnen der Isolierbereiche und der Kontaktbereiche. Vorzugsweise wird der jeweilige Kontaktbereich an seiner jeweiligen Stirnseite von einem Isolierbereich teilweise abgedeckt. Der jeweils nicht abgedeckte kreisring-förmige Teil wird hier als Ringfläche bezeichnet.

Vorzugsweise sind die Vorsprünge in der Aussparung so angeordnet, dass sie bei einer Drehbewegung des Schleifrings einen Luftstrom in radial nach außen zeigender Richtung induzieren.

Der Schleifring weist vorzugsweise Kontaktelemente auf. Die Kontaktelemente sind vorzugsweise an einer Stirnseite des Schleifrings angeordnet. Die Kontaktelemente sind vorzugsweise elektrisch leitfähig mit der entsprechenden Kontaktfläche verbunden.

Der Kontaktbereich kann jeweils dazu ausgebildet sein, elektrische Energie von einem elektrisch leitfähigen Schleifringelement aufzunehmen. Das elektrisch leitfähige Schleifringelement ist beispielhaft als Bürste ausgebildet. Das elektrisch leitfähige Schleifringelement ist zur Übertragung der elektrischen Energie von einer stationären Anordnung aus vorgesehen.

Durch die Erfindung kann das elektrisch leitfähige Schleifringelement von der Seite, welche die Kontaktbahn berührt, mit Hilfe eines Luftstroms gekühlt werden.

Darüber hinaus kann eine Fremdbelüftung eingespart werden.

Durch die verbesserte Kühlung kann der Schleifring kleiner und kompakter und deshalb leichter ausgestaltet sein.

In einer vorteilhaften Ausgestaltung der Erfindung ist der jeweilige Vorsprung zur Bereitstellung eines Luftstroms in radialer Richtung vorgesehen.

Die Aufprägung dient bei einer Drehbewegung des Schleifrings zur Erzeugung des Luftstroms, um ein Schleifringelement zu kühlen, welches elektrische Energie auf den jeweiligen Kontaktbereich überträgt. Durch die vorteilhafte Anordnung der Aufprägung im Inneren der Aussparung verläuft der Luftstrom von unten an die Unterseite und die seitlichen Flächen der Schleifringelemente.

In einer weiteren vorteilhaften Ausgestaltung der Erfindung ist die jeweilige Aussparung im Bereich der axialen Mitte der Kontaktfläche positioniert.

Die Aussparung ist vorzugsweise im Bereich der Mitte oder in der Mitte der in axialer Richtung verlaufenden Breite der Kontaktfläche angeordnet.

Beispielhaft weist die Aussparung eine Breite von etwa einem Drittel der Breite der Kontaktfläche auf.

Durch die mittige Anordnung der Aussparung strömt der Luftstrom besonders gleichmäßig durch die Aussparung und auf die Mitte der jeweiligen Schleifringelemente zu. Vorzugsweise sind die Schleifringelemente zweiteilig ausgeführt, insbesondere mit einer Aussparung versehen. Alternativ sind die Schleifringelemente auf durch zwei beabstandet ausgeführte Schleifringelemente ausgebildet. Der Luftstrom strömt in dieser Ausführung vorzugsweise zwischen den Schleifringelementen hindurch.

Hierdurch werden die Schleifringelemente entsprechend durch den vorbeiziehenden Luftstrom auf der jeweils einander zugewandten Seite gekühlt. Entsprechend wird auch der Schleifring durch die vergrößerte Oberfläche besser gekühlt.

Durch die Anordnung der Aussparung in der Mitte der Kontaktfläche ist eine besonders gleichmäßige Kühlung der Kontaktfläche und des zumindest einen Schleifringelementes möglich.

Vorzugsweise weist ein Schleifring drei Kontaktbereiche für drei elektrische Phasen auf. Die Kontaktbereiche sind jeweils durch einen Isolierbereich voneinander getrennt. Insbesondere zwischen einem ersten Kontaktbereich und einem zweiten Kontaktbereich ist ein Isolierbereich zur Beabstandung der beiden Kontaktbereiche positioniert, wobei der Isolierbereich insbesondere zur elektrischen Isolation der Kontaktbereiche untereinander ausgebildet ist.

Der Radius des jeweiligen Kontaktbereiches ist größer als der Radius des jeweiligen Isolierbereiches.

Vorzugseise sind sowohl der jeweilige Kontaktbereich und der jeweilige Isolierbereich im Wesentlichen zylinderförmig ausgebildet. Die jeweils radial außen liegenden Teile des jeweiligen Kontaktbereiches werden hier als Ringflächen bezeichnet.

Die jeweilige Ringfläche weist vorzugsweise einen Normalenvektor auf, der in axialer Richtung zeigt.

Durch die Ausführung der Isolierbereiche mit einem geringeren Radius als die Kontaktbereiche liegen die Ringflächen frei und können durch einen Luftstrom verbessert gekühlt werden.

Der Kontaktbereich weist Öffnungen auf, wobei die Öffnungen jeweils in einer in radialer Richtung über den Isolierbereich herausragenden Ringfläche angeordnet sind, wobei die Öffnungen in die jeweiligen Aussparungen führen.

Die Öffnungen sind derart ausgebildet, dass sie einen Kanal für den Luftstrom in die Aussparung ausbilden.

Die Öffnungen dienen somit insbesondere zur Überführung des Luftstroms in das Innere der Aussparung.

Vorzugsweise weisen beide Ringflächen des jeweiligen Kontaktbereichs Öffnungen auf. Vorteilhaft sind die Öffnungen jeweils an denselben Stellen der jeweiligen Ringfläche positioniert. Die Öffnungen verlaufen durch den Kontaktbereich schräg zur axialen Richtung. So kann ein in axialer Richtung verlaufender Luftstrom durch die Öffnungen in die Aussparung hineingeführt werden. Durch die Verbindung der Öffnung und der Aussparung kann der Luftstrom, der durch die Öffnung in die Aussparung strömt, aus der Aussparung in radialer Richtung hinausströmen. Vorzugsweise sind beide Ringflächen des jeweiligen Kontaktbereiches mit Öffnungen versehen. Die Öffnungen können in diesem Fall an denselben tangentialen Stellen positioniert sein.

Die Öffnungen verlaufen jeweils schräg zur axialen Richtung.

Schräge von etwa 5 Grad bis 45 Grad ist zur Normalen der jeweiligen Ringfläche ausgebildet. So kann die jeweilige Öffnung zur Bereitstellung eines Luftstroms in die Aussparung dienen.

Die Ringflächen sind die radial verlaufenden, kreisring-förmigen Flächen, welche aufgrund eines größeren Durchmessers der Kontaktbahn als der Mantelfläche des übrigen Schleifrings ausgebildet sind.

Insbesondere nicht orthogonal zur Ringfläche ausgebildete Öffnungen dienen zur Verbesserung des radial nach außen zeigenden Luftstroms.

Die Öffnungen verbessern demnach die Kühlung des Schleifringes oder der Schleifringeinheit erheblich.

In einer weiteren vorteilhaften Ausgestaltung der Erfindung weist zumindest ein Isolierbereich Vorsprünge oder Ausprägungen auf.

Die Vorsprünge oder Ausprägungen dienen vorzugsweise zum Erzeugen oder zur Unterstützung des Luftstroms in axialer Richtung.

Eine Ausprägung, die in einem Isolierbereich angeordnet ist, kann nach innen zeigend ausgerichtet sein. Ein solcher Isolierbereich kann als Lüfter ausgebildet sein.

Die Vorsprünge und/oder Ausprägungen dienen vorzugsweise zur Verbesserung der Kühlung.

In einer Ausgestaltung der Erfindung ist der Schleifring zur Übertragung einer elektrischen Leistung von mindestens 100 Kilowatt, insbesondere 1 Megawatt, ausgebildet.

Vorteilhaft verteilt sich die übertragene elektrische Energie auf drei Kontaktbereiche. Darüber hinaus kann der jeweilige Kontaktbereich mit einer Mehrzahl von elektrisch leitfähigen Schleifringelementen beaufschlagt sein.

Zur Übertragung von solch großen Mengen elektrischer Energie ist eine Kühlung des Schleifrings und/oder der Schleifringeinheit vorteilhaft.

In einer weiteren vorteilhaften Ausgestaltung der Erfindung ist zumindest an einer Seite des Schleifrings ein Lüfter angeordnet, wobei der Lüfter jeweils drehfest an der Seite des Schleifrings angeordnet ist.

Der zumindest eine Lüfter kann auch von dem Schleifring beabstandet an der Achse befestigt sein.

Der zumindest eine Lüfter dient vorzugsweise zur Erzeugung eines Luftstroms, insbesondere eines axialen Luftstroms. Der Luftstrom verläuft vorzugsweise in axialer Richtung entlang der Mantelfläche des Schleifrings. Der Luftstrom strömt vorzugsweise durch die Öffnungen in die Aussparung. Zumindest zum Teil wird der Luftstrom in radialer Richtung auf die elektrisch leitfähigen Schleifringelemente und/oder auf die stationäre Anordnung geleitet. Der Luftstrom im Inneren der Aussparung dient insbesondere zur Kühlung des jeweiligen Kontaktbereiches.

Ein Vorsprung kann zur Einteilung einer Aussparung in eine Mehrzahl von tangential nebeneinander angeordneten Aussparungen führen. Vorzugsweise bildet eine Seite des jeweiligen Vorsprungs einen Teil der Kontaktfläche.

Vorzugsweise ist der jeweilige Vorsprung derart ausgeführt, dass der Kontaktbereich zwei Deckscheiben aufweist, wobei die jeweilige Deckscheibe einen Teil ihrer Mantelfläche ausgespart hat und die Aussparung durch das Zusammenfügen der jeweiligen Scheiben ausgebildet wird. Hierbei sind die Deckscheiben vorzugsweise so zusammengeführt, dass die Aussparung auf beide Deckscheiben aufgeteilt ist.

Alternativ kann die jeweilige Deckscheibe keine Aussparung aufweisen und jeweils an eine Stirnseite einer Zwischenschicht grenzen. Hierbei weist die Zwischenschicht die zumindest eine Aussparung auf. Die Zwischenschicht kann eine Mantelfläche mit einem kleineren Durchmesser als die Deckschichten aufweisen, wobei auf der Mantelfläche der Zwischenschicht vorzugsweise die Vorsprünge angeordnet sind. Der jeweilige Vorsprung kann bereichsweise an den Durchmesser der jeweiligen Deckschicht heranreichen und so die Aussparung in eine Mehrzahl von tangential beabstandeten Aussparungen teilen.

Durch die tangential erfolgende Unterbrechung der Aussparung durch die jeweilige Aufprägung kann ein Luftstrom mit einer besonders hohen Flussdichte erzeugt werden.

Die Schleifringeinheit weist eine stationäre Anordnung zur Führung und/oder Halterung von elektrisch leitfähigen Schleifringelementen, insbesondere Bürsten, zur kontaktierenden Drehübertragung von elektrischer Energie, und einen vorstehend beschriebenen Schleifring auf, wobei zumindest ein Schleifringelement zur Übertragung der elektrischen Energie auf eine der Kontaktschichten des Schleifrings ausgebildet ist.

Die Schleifringeinheit weist vorzugsweise eine Mehrzahl von Schleifringelementen auf, die jeweils mit einer Kontaktfläche oder einem Kontaktbereich in einer Wirkverbindung stehen. Die Schleifringelemente sind vorzugsweise als Bürsten ausgebildet. Die Schleifringelemente dienen zur Bereitstellung der elektrischen Energie, welche auf die jeweilige Kontaktbahn übertragen wird.

Durch den Schleifring können durch die Aussparung in Verbindung mit den Aufprägungen die Schleifringelemente verbessert gekühlt werden. So kann die Schleifringeinheit besonders kompakt aufgebaut sein.

In einer weiteren vorteilhaften Ausgestaltung der Erfindung weist der Schleifring Kontaktelemente auf, wobei die Kontaktelemente eine elektrische Verbindung von beispielsweise Wicklungen in einem Rotor erlauben. Die Kontaktelemente sind elektrisch mit dem jeweiligen Kontaktbereich verbunden.

Die elektrische Maschine ist insbesondere als Generator für eine Windkraftanlage ausgebildet. Die elektrische Maschine weist einen vorstehend beschriebenen Schleifring oder eine vorstehend beschriebene Schleifringeinheit auf.

Vorzugsweise findet der hier beschriebene Schleifring in einer Windkraftanlage, einem Industriemotor, oder einem Antrieb für die Schwerindustrie Anwendung. Vorzugsweise dient eine hier beschriebene elektrische Maschine als Antrieb im Bereich des Bergbaus, bei Schiffsantrieben oder im Bereich der Ölförderung.

Im Folgenden wird die Erfindung anhand von Figuren näher beschrieben und erläutert. Die in den Figuren gezeigten Merkmale können im Rahmen der Erfindung zu neuen Ausführungen der Erfindung zusammengesetzt werden. Die in den Figuren gezeigten Ausführungen grenzen die Erfindung keinesfalls ein. Es zeigen:
- FIG 1: ein Schema einer Schleifringeinheit,
- FIG 2: einen beispielhaften Schleifring,
- FIG 3: einen Kontaktbereich mit Aussparungen,
- FIG 4: eine Schnittdarstellung eines möglichen Schleifrings,
- FIG 5: eine weitere Schnittdarstellung, sowie
- FIG 6: eine weitere Schnittdarstellung.

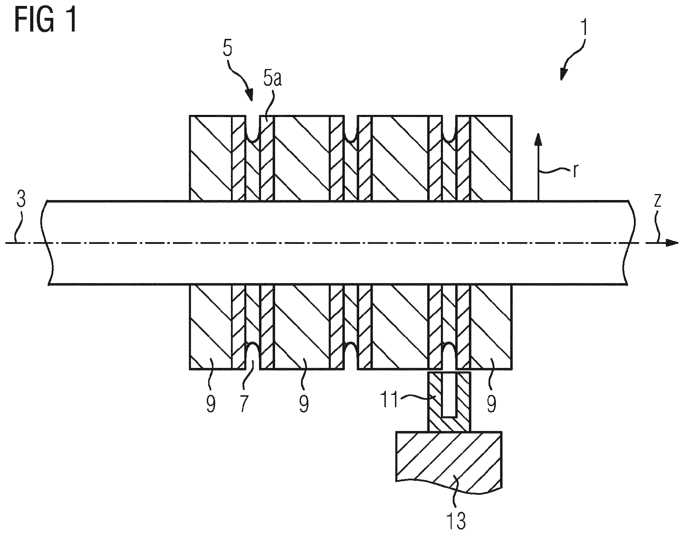

FIG 1 zeigt ein Schema einer Schleifringeinheit 17. Die Schleifringeinheit 17 umfasst einen Schleifring 1, ein elektrisch leitfähiges Schleifringelement 11 und eine stationäre Anordnung 13. Der Schleifring 1 ist auf einer Achse 3 positioniert und mit der Achse 3 drehbar gelagert. Der Schleifring 1 umfasst Kontaktbereiche 5 und Isolierbereiche 9. Die Kontaktbereiche 5 weisen an ihrer Mantelfläche zwei Kontaktflächen 5a auf. Die Kontaktflächen 5a des jeweiligen Kontaktbereiches 5 sind durch die Aussparung 7 zumindest bereichsweise getrennt. Die Aussparung 7 ist hier in der Mitte der jeweiligen Kontaktbahn 5 angeordnet. Vorsprünge 8 in der jeweiligen Aussparung 7 sind aus Gründen der Übersichtlichkeit nicht dargestellt.

In den nachfolgend beschrieben Figuren bezeichnet das Bezugszeichen z die axiale Richtung, das Bezugsweisen r die radiale Richtung und das Bezugszeichen t die tangentiale Richtung.

In der hier gezeigten Ausführung umfasst der Schleifring 1 drei Kontaktbereiche 5 und vier Isolierbereiche 9, wobei der jeweilige Kontaktbereich 5 mit seiner jeweiligen Stirnseite an einen Isolierbereich 9 angrenzt. Die Kontaktbereiche 5 und die Isolierbereiche 9 sind drehfest in axialer Richtung z auf der Achse 3 befestigt.

In der Regel dient für jeden Kontaktbereich 5 zumindest ein Schleifringelement 11 zur Übertragung von elektrischer Energie auf die Kontaktfläche 5a und damit auf den Kontaktbereich. Das jeweilige Schleifringelement 11 ist jeweils von einer stationären Anordnung so positioniert, dass das Schleifringelement 11 die entsprechende Kontaktfläche 5a berührt. Das Schleifringelement 11 weist hier eine Aussparung auf. Das Schleifringelement 11 kann auch zweigeteilt ausgebildet sein. Vorzugsweise verläuft der Luftstrom 15 auch zwischen den (zweiteilig ausgeführten) Schleifringelementen 11 oder durch die Aussparung des Schleifringelements 11.

Die stationäre Anordnung 13 dient zur Halterung des Schleifringelements 11. Das Schleifringelement 11 berührt während des Betriebes die entsprechende Kontaktbahn 5. Das Schleifringelement 11 ist vorzugsweise als Bürste ausgebildet und dient zur Übertragung von elektrischer Energie auf den Schleifring.

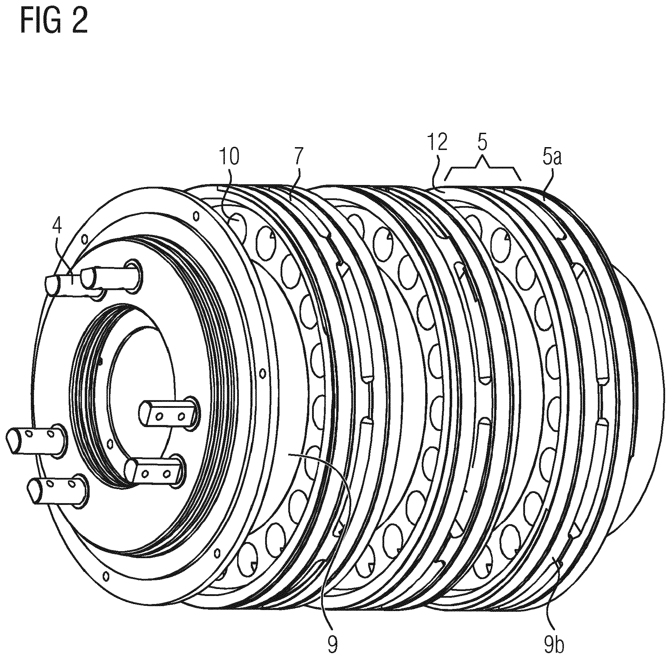

FIG 2 zeigt einen beispielhaften Schleifring 1. Der Schleifring weist drei Kontaktbereiche 5 auf. Zwischen den Kontaktbereichen 5 sind jeweils Isolierbereiche 9 in axialer Richtung z benachbart angeordnet. Die Isolierschichten 9 dienen zur elektrischen und thermischen Isolation der Kontaktbereiche 5 untereinander. Die Isolierschicht dient weiter zur Stabilisierung des Schleifrings 1, so dass die Kontaktbereiche 5 einen definierten Abstand zueinander einhalten. Die Kontaktbereiche 5 und die Isolierbereiche 9 sind in axialer Richtung z miteinander befestigt. Die Kontaktbereiche 5 weisen einen größeren Radius als die Isolierbereiche 9 auf, so dass die Kontaktbereiche 5 auf dem nicht abgedeckten Teil ihrer Stirnseite jeweils eine Ringfläche 12 ausbilden. Die Ringfläche 12 ragt in radialer Richtung r über die Mantelfläche der jeweiligen Isolierschicht 9 heraus.

Die Ringflächen 12 weisen Öffnungen 10 auf, wobei die Öffnungen 10 einen Durchgang zu den Aussparungen 7 ausbilden. Die Öffnungen 10 sind in tangentialer Richtung t beabstandet angeordnet. Die Aussparungen 7 des jeweiligen Kontaktbereiches 5 sind unterbrochen. Die Unterbrechungen, welche die Aussparung in tangentialer Richtung t unterbrechen, wirken wie ein Vorsprung 8. Der jeweilige Vorsprung 8 oder die jeweilige Unterbrechung dient zur Bereitstellung eines Luftstroms 15 in radialer Richtung r.

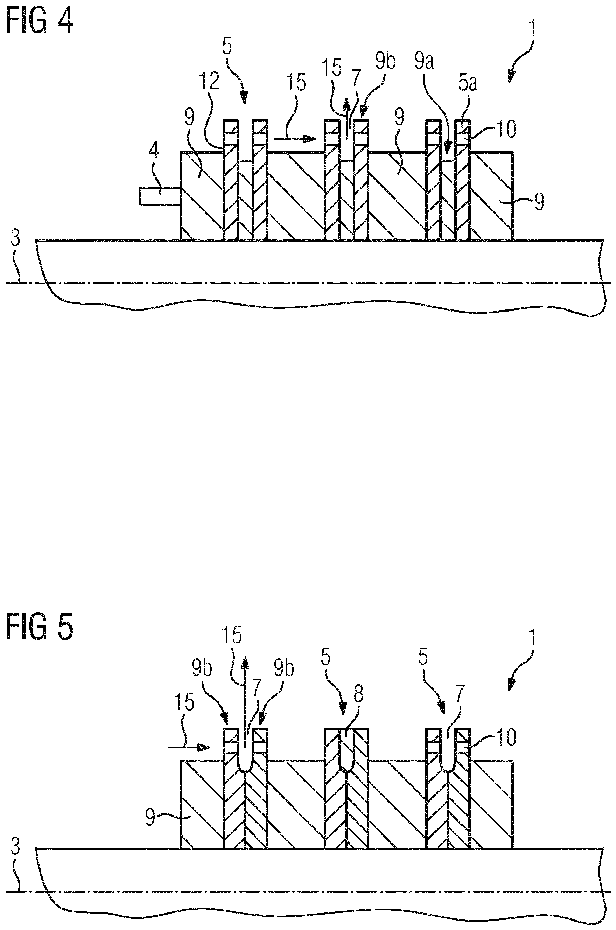

Die Öffnungen 10 in der jeweiligen Ringfläche 12 dienen zur Überführung eines Luftstroms 15 (durch einen Pfeil in FIG 5 dargestellt) in den jeweiligen Teil der Aussparung 7. Vorzugsweise sind die Öffnungen 10 derart positioniert, dass der Luftstrom 15 durch die Öffnungen 10 durch den Kontaktbereich 5 und die Aussparung 7 hindurch strömen kann. Hierzu sind die Öffnungen 10 vorzugsweise nicht in tangentialer Richtung t versetzt angeordnet.

Der Schleifring 1 weist an einer Stirnseite Kontaktelemente 4 auf. Die Kontaktelemente sind elektrisch mit dem jeweiligen Kontaktbereich 5 verbunden. Die elektrische Verbindung führt vorzugsweise durch den Isolierbereich 9.

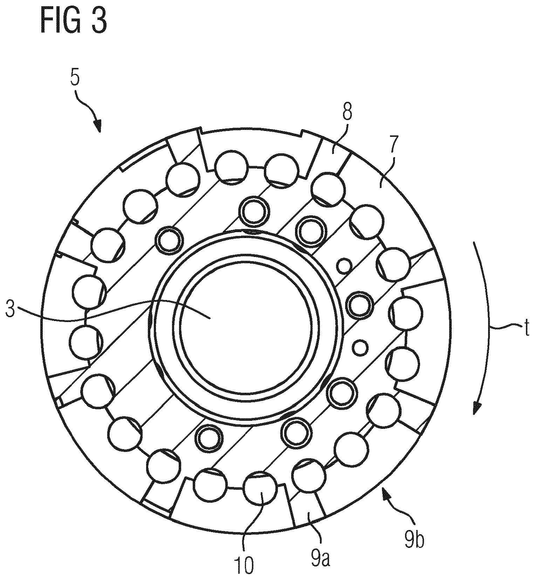

FIG 3 zeigt einen Kontaktbereich 5 mit Aussparungen 7. Der Kontaktbereich 5 umfasst eine Zwischenschicht 9a, die schraffiert dargestellt ist. Darüber hinaus deutet die FIG 3 eine Deckschicht 9b an. Die Zwischenschicht 9a umfasst Aussparungen 7 in tangentialer Richtung t. Vorsprünge 8 oder Unterbrechungen 8 dienen zur Unterbrechung der Aussparung 7 in tangentialer Richtung t. Die Zwischenschicht 9a und die jeweilige Deckschicht 9b sind zumindest bereichsweise weitgehend zylinderförmig ausgebildet. In der Regel weist die jeweilige Deckschicht 9b eine runde Mantelfläche auf, wobei die Rundlaufeigenschaft der Deckschicht nur eine geringe Abweichung aufweist. An der Mantelfläche der Deckschicht 9b ist die Kontaktfläche 5a positioniert. Die gezeigten Öffnungen 10 dienen zur Überführung eines Luftstroms 15 in den jeweiligen Teil der Aussparung 7 des Kontaktbereiches 5, so dass ein Luftstrom 15 in radialer Richtung r die (nicht dargestellten) elektrisch leitfähigen Schleifringelemente 11 bei der Drehbewegung des Schleifrings 1 kühlt. Zwischen den Öffnungen 10 und der Achse 3 sind Kreise zur Durchführung der Kontaktelemente 4 angedeutet.

Die schraffiert dargestellte Zwischenschicht 9a ist auf ihrer jeweiligen Stirnfläche mit jeweils einer Deckschicht 9b beaufschlagt, wobei die Deckschicht 9b die Öffnungen 10 an deren Seitenflächen 12 aufweist. Die beiden Deckschichten 9b bilden die Ringfläche 12 in dem Bereich, indem sie nicht von dem Isolierbereich 9 beaufschlagt sind.

Alternativ kann der Kontaktbereich 5 auf aus einem Stück ausgebildet sein. Vorzugsweise sind dann die Aussparungen 7 mittels eines spanabhebenden Verfahrens, z.B. Fräsen, in die Mantelfläche eingearbeitet.

FIG 4 zeigt eine Schnittdarstellung eines möglichen Schleifrings 1. An der Unterseite ist ein Ausschnitt von der Achse 3 gezeigt. Der Schleifring 1 umfasst vier Isolierbereiche 9, wobei der jeweilige Isolierbereich 9 zur Beabstandung und Isolation des jeweiligen Kontaktbereiches 5 dient. Der jeweilige Kontaktbereich 5 umfasst in der gezeigten Ausführung jeweils eine Zwischenschicht 9a und zwei Deckschichten 9b. In der Schnittdarstellung wird deutlich, dass die Zwischenschicht 9a jeweils über den jeweiligen Isolierbereich 9 hinausragt und an der Stirnfläche die Ringfläche 12 ausbildet. Die Ringfläche 12 weist, in tangentialer Richtung t beabstandet, die Öffnungen 10 auf. Die jeweilige Öffnung 10 der beiden Deckschichten 9b sind vorzugsweise so angeordnet, dass sie einen Durchgangskanal für den Luftstrom 15 ausbilden. Die Mantelfläche der jeweiligen Deckschicht 9b bildet die Kontaktfläche 5a. Die jeweils lediglich durch die Zwischenschicht 9b getrennte Kontaktfläche 5a können durch ein Schleifringelement 11 beaufschlagt werden.

Die Vorsprünge 8 können an der Mantelfläche des jeweiligen Isolierbereiches 9 angeordnet sein. Alternativ können Vorsprünge 8 in der jeweiligen Aussparung angeordnet sein.

Alternativ ist der jeweilige Kontaktbereich 5 massiv oder einstückig ausgeführt. Eine solche einstückige Ausführung verzichtet auf die Unterteilung des Kontaktbereiches 5 in eine Zwischenschicht 9a und den Deckschichten 9b.

FIG 5 zeigt eine weitere Schnittdarstellung. Dargestellt ist ein weiterer beispielhafter Schleifring 1 auf einer Achse 3. Der jeweilige Kontaktbereich 5 umfasst hier jeweils zwei Deckschichten 9b. Die Deckschichten 9b bilden durch ihre Form die Aussparung 7. In der Mitte angeordnet sind zwei Deckschichten 9b, die durch die gezeigte Aufprägung 8 keine Aussparung 7 an der dargestellten Position in tangentialer Richtung t ausbilden. Die Kontaktfläche 5a umfasst in dieser Position die Mantelfläche der beiden Deckschichten 9b. An der tangentialen Position, wo die Deckschichten 9b keine Aussparung 7 ausbilden, sind vorzugsweise keine Öffnungen 10 in den Ringflächen 12 der jeweiligen Deckschicht 9b vorhanden.

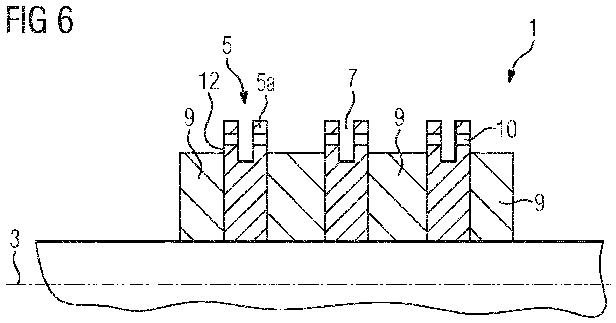

FIG 6 zeigt eine weitere Schnittdarstellung. Im Vergleich zu den in FIG 4 und FIG 5 gezeigten Darstellungen, ist der jeweilige Kontaktbereich 5 einstückig ausgebildet. Vorzugsweise ist der Kontaktbereich 5 aus einem Stück, insbesondere mit Hilfe einer Drehmaschine, hergestellt.

Zusammenfassend betrifft die Erfindung einen Schleifring 1 nach Anspruch 1, eine Schleifringeinheit 17 und eine elektrische Maschine mit einem solchen Schleifring 1. Der Schleifring 1 dient zur Übertragung von elektrischer Energie von einer stationären Einheit 13 über ein elektrisch leitfähiges Schleifringelement 11 auf einen Kontaktbereich 5. Der Kontaktbereich 5 weist in tangentialer Richtung t zumindest eine Aussparung 7 auf. Die Aussparung 7 oder zwischen den Kontaktbereichen 5 angeordnete Isolierschichten 9 weisen zumindest einen Vorsprung 8 auf, wobei die Vorsprünge 8, insbesondere bei einer Drehbewegung des Schleifrings 1, einen Luftstrom 15 zur Kühlung des Kontaktbereiches 5 und/oder des Schleifringelements 11 hervorrufen. Zur Verbesserung des Luftstroms 15 werden in Ringflächen 12, die durch einen vergrößerten Radius des Kontaktbereiches 5 im Vergleich zu den benachbart angeordneten Isolierebereichen 9 gebildet sind, Öffnungen 10 eingebracht. Die Öffnungen 10 dienen zur Überführung des Luftstroms 15 in die jeweilige Aussparung 7. Durch die Merkmale der Erfindung können bei einer kompakten Bauform des Schleifrings 1 große Mengen elektrischer Energie übertragen werden. Deshalb eignet sich der Schleifring 1 insbesondere zum Einsatz in einer Windkraftanlage.

## Patentansprüche

1. Schleifring (1), insbesondere für einen Rotor mit Wicklungen einer elektrischen Maschine, insbesondere zum Einsatz in einer Windkraftanlage, aufweisend zumindest einen Kontaktbereich (5) und zumindest zwei Isolierbereiche (9), wobei die Isolierbereiche (9) und der zumindest eine Kontaktbereich (5) axial benachbart angeordnet sind, wobei zumindest der jeweilige Kontaktbereich im Wesentlichen zylinderförmig ausgebildet ist, wobei der Kontaktbereich (5) zumindest in radial nach außen zeigender Richtung (r) eine Kontaktfläche (5a) aufweist, wobei der Kontaktbereich (5) im Bereich der Kontaktfläche (5a) eine Aussparung (7) aufweist,
wobei die Aussparung (7) auf der Innenseite Vorsprünge (8) aufweist und/oder die Aussparung (7) in tangentialer Richtung (t) unterbrochen ist,
- der Radius des jeweiligen Kontaktbereiches (5) größer als der Radius des jeweiligen Isolierbereiches (9) ist,
- der Kontaktbereich (5) Öffnungen (10) aufweist, wobei die Öffnungen (10) jeweils in einer in radialer Richtung über den Isolierbereich (9) herausragenden Ringfläche angeordnet sind, wobei die Öffnungen (10) in die Aussparung (7) führen, **dadurch gekennzeichnet, dass**
- die Öffnungen (10) zur axialen Richtung schräg verlaufen und die Schräge in einem Intervall von 5 Grad bis 45 Grad zu einer Normalen der Ringfläche ausbildet ist.

2. Schleifring (1) nach Anspruch 1, wobei der jeweilige Vorsprung (8) zur Bereitstellung eines Luftstroms (15) in radialer Richtung (r) vorgesehen ist.

3. Schleifring (1) nach einem der vorangehenden Ansprüche, wobei die Aussparung im Bereich der axialen Mitte der Kontaktfläche (5a) positioniert ist.

4. Schleifring (1) nach einem der vorangehenden Ansprüche, wobei zumindest ein Isolierbereich (9) Ausprägungen oder Vorsprünge (8) umfasst.

5. Schleifring (1) nach einem der vorangehenden Ansprüche, wobei der Kontaktbereich (5) zumindest zwei Kontaktschichten (9a,9b) umfasst, wobei die Kontaktschichten (9a,9b) an den axial zueinander zeigenden Flächen jeweils zumindest eine Aussparung (7) aufweisen, wobei die jeweilige Aussparung (7) die Kontaktfläche (5a) verkleinert.

6. Schleifringeinheit (17), aufweisend eine stationäre Anordnung (13) zur Führung und/oder Halterung von elektrisch leitfähigen Schleifringelementen (11), insbesondere Bürsten, zur kontaktierenden Drehübertragung von elektrischer Energie, und einen Schleifring (1) nach einem der vorangehenden Ansprüche, wobei zumindest ein Schleifringelement (11) zur Übertragung der elektrischen Energie auf einen der Kontaktbereiche (5) ausgebildet ist.

7. Elektrische Maschine, insbesondere Generator für eine Windkraftanlage, aufweisend einen Schleifring (1) nach einem der Ansprüche 1 bis 6 oder eine Schleifringeinheit (17) nach Anspruch 7.

8. Windkraftanlage, aufweisend eine elektrische Maschine nach dem vorangehenden Anspruch.

## Claims

1. Slip ring (1), in particular for a rotor having windings of an electric machine, in particular for the use in a wind power installation, having at least one contacting region (5) and at least two isolating regions (9), wherein the isolating regions (9) and the at least one contacting region (5) are disposed so as to be axially adjacent, wherein at least the respective contacting region is configured so as to be substantially cylindrical, wherein the contacting region (5) at least in the direction (r) pointing radially outwards has a contact surface (5a), wherein the contacting region (5) in the region of the contacting face (5a) has a recess (7), wherein
- the recess (7) on the internal side has protrusions (8), and/or the recess (7) in the tangential direction (t) is interrupted;
- the radius of the respective contacting region (5) is larger than the radius of the respective isolating region (9);
- the contacting region (5) has openings (10), wherein the openings (10) are in each case disposed in an annular surface that in the radial direction protrudes beyond the isolating region (9), wherein the openings (10) lead into the recess (7);
**characterized in that**
- the openings (10) run obliquely to the axial direction and the slope is configured at an interval of 5 degrees to 45 degrees in relation to a normal of the annular face.

2. Slip ring (1) according to Claim 1, wherein the respective protrusion (8) is provided for providing an airflow (15) in the radial direction (r).

3. Slip ring (1) according to either of the preceding claims, wherein the recess is positioned in the region of the axial centre of the contact surface (5a) .

4. Slip ring (1) according to one of the preceding claims, wherein at least one isolating region (9) comprises stamped portions or protrusions (8).

5. Slip ring (1) according to one of the preceding claims, wherein the contacting region (5) comprises at least two contacting layers (9a, 9b), wherein the contacting layers (9a, 9b) on the faces that axially point towards one another have in each case at least one recess (7), wherein the respective recess (7) decreases the size of the contacting face (5a).

6. Slip ring unit (17), having a stationary assembly (13) for guiding and/or mounting electrically conductive slip ring elements (11), in particular brushes, for the contacting, rotating transmission of electric power, and a slip ring (1) according to one of the preceding claims, wherein at least one slip ring element (11) is configured to transmit the electric power to one of the contacting regions (5).

7. Electric machine, in particular a generator for a wind power installation, having a slip ring (1) according to one of Claims 1 to 6, or a slip ring unit (17) according to Claim 7.

8. Wind power installation, having an electric machine according to the preceding claim.

## Revendications

1. Bague collectrice (1), notamment pour un rotor avec des bobinages d'une machine électrique, notamment pour l'insertion dans une installation éolienne, comportant au moins une zone de contact (5) et au moins deux zones isolantes (9), les zones isolantes (9) et l'au moins une zone de contact (5) étant disposées à proximité dans le plan axial, au moins la zone de contact respective étant réalisée pour l'essentiel en forme de cylindre, la zone de contact (5) comportant une surface de contact (5a) au moins dans la direction (r) indiquant vers l'extérieur dans le plan radial, la zone de contact (5) comportant un évidement (7) dans la région de la surface de contact (5a), l'évidement (7) comportant sur le côté intérieur des saillies (8) et/ou l'évidement (7) étant interrompu dans la direction tangentielle (t) ;
- le rayon de la zone de contact (5) respective étant plus grand que le rayon de la zone isolante (9) respective ;
- la zone de contact (5) comportant des ouvertures (10), les ouvertures (10) étant respectivement disposées dans une surface annulaire saillant dans la direction radiale au-delà de la zone isolante (9), les ouvertures (10) conduisant dans l'évidement (7) ;
**caractérisée en ce que** :
- les ouvertures (10) s'étendant de façon inclinée par rapport à la direction axiale et la pente étant formée à un intervalle de 5 degrés à 45 degrés par rapport à la normale de la surface annulaire.

2. Bague collectrice (1) selon la revendication 1, la saillie (8) respective étant prévue pour la mise à disposition d'un courant d'air (15) dans la direction radiale (r).

3. Bague collectrice (1) selon l'une quelconque des revendications précédentes, l'évidement étant positionné dans la zone du milieu axial de la surface de contact (5a) .

4. Bague collectrice (1) selon l'une quelconque des revendications précédentes, au moins une zone isolante (9) comprenant des reliefs ou saillies (8).

5. Bague collectrice (1) selon l'une quelconque des revendications précédentes, la zone de contact (5) comprenant au moins deux couches de contact (9a, 9b), les couches de contact (9a, 9b) comportant respectivement au moins un évidement (7) au niveau des surfaces orientées l'une vers l'autre dans le plan axial, l'évidement (7) respectif réduisant la surface de contact (5a).

6. Unité de bague collectrice (17), comportant un agencement stationnaire (13) pour guider et/ou fixer un des éléments de bague collectrice (11), notamment des balais, pour la transmission pivotante avec mise en contact d'énergie électrique et une bague collectrice (1) selon l'une quelconque des revendications précédentes, au moins un élément de bague collectrice (11) étant réalisé pour transmettre l'énergie électrique à une des zones de contact (5).

7. Machine électrique, notamment générateur pour une installation éolienne, comportant une bague collectrice (1) selon l'une quelconque des revendications 1 à 6 ou une unité de bague collectrice (17) selon la revendication 7.

8. Installation éolienne, comportant une machine électrique selon la revendication précédente.
